# EUROPEAN PATENT SPECIFICATION

(11) **EP 3 816 690 B1**
(45) Date of publication and mention of the grant of the patent: **11.03.2026**
(21) Application number: 20202643.1
(22) Date of filing: 19.10.2020
(51) Int. Cl.: G02B 6/44, G02B 6/52

(54) **ULTRAHIGH-DENSITY LARGE-CORE-NUMBER AIR-BLOWING MICRO-CABLE AND PROCESS OF MANUFACTURING THE SAME**
ULTRAHOCHDICHTES LUFTGEBLASENES MIKROKABEL MIT GROSSER KERNZAHL UND VERFAHREN ZU SEINER HERSTELLUNG
MICROCÂBLE DE SOUFFLAGE D'AIR À GRAND NOMBRE DE NOYAUX ULTRA HAUTE DENSITÉ ET SON PROCÉDÉ DE FABRICATION

(30) Priority: 29.10.2019 CN 201911039699
(43) Date of publication of application: 05.05.2021
(73) Proprietor: Hengtong Optic-Electric Co., Ltd, Suzhou, Jiangsu 215234 (CN)
(72) Inventor: LI, Wei, Suzhou, Jiangsu 215234 (CN); ZHOU, Feng, Suzhou, Jiangsu 215234 (CN); WU, Binhua, Suzhou, Jiangsu 215234 (CN); FEI, Huaqing, Suzhou, Jiangsu 215234 (CN); WANG, Rui, Suzhou, Jiangsu 215234 (CN); SUN, Lihua, Suzhou, Jiangsu 215234 (CN); LIU, Peidong, Suzhou, Jiangsu 215234 (CN); SHI, Huiping, Suzhou, Jiangsu 215234 (CN)
(74) Representative: Valet Patent Services Limited

(56) References cited:
- CN-A- 105 204 133
- CN-A- 109 061 822
- CN-U- 205 942 026
- US-A- 5 343 549
- US-A1- 2014 112 630
- US-A1- 2016 041 354

## Description

### FIELD

The present invention relates to the technical field of photoelectric composite cable structures, and more particularly, to an ultrahigh-density large-core-number air-blowing micro-cable, and the present invention further provides a process of manufacturing the air-blowing micro-cable.

### BACKGROUND

With increasingly high requirements of global communication services for a network bandwidth, optical fiber communication is widely used as the fastest communication mode with the best transmission quality. However, in network construction, with the shortage of pipeline resources, higher requirements are placed on pipelines in terms of space utilization, construction efficiency and convenience of maintenance. As a mature optical cable network laying technology, air-blowing micro-tube and micro-cable technology has been widely promoted in an international market due to its excellent comprehensive performance and unique laying mode. The increasing demand for air-blowing micro-cables promotes optical cables to develop towards large core number and small cable diameter.

In a traditional layer-twisting air-blowing micro-cable, more than four tubes of 2-24 cores are generally twisted around a central reinforcing piece to form a cable core, and then the optical cable is formed using a polyethylene sheath. At present, urban pipelines are increasingly short, and existing pipeline resources fail to be fully used, thus greatly affecting a competitiveness of products. Therefore, it is very important to reduce an equivalent area of the same number of optical fibers in the tube, increase an optical fiber density of the optical cable with the same number of cores, reduce an outer diameter of the optical cable and be compatible with a small-size air-blowing micro-cable.

Publication US20140112630A1 discloses an optical fiber cable including, in a radial direction outward, a central strength member, a first layer of loose buffer tubes stranded around the central strength member, at least one of the loose buffer tubes of the first layer containing at least one light waveguide, an intermediate layer, a second layer of loose buffer tubes stranded around the intermediate layer, at least one of the loose buffer tubes of the second layer containing at least one light waveguide, and a jacket surrounding the second layer of loose buffer tubes, wherein the intermediate layer is formed of a material having a high coefficient of friction. Publication CN205942026U relates to an ant-proof air-blown micro cable with large core number and small cable diameter. Publication US20160041354A1 discloses an optical communication cable, which includes an outer cable layer and a plurality of optical fiber bundles surrounded by the outer cable layer. Each optical fiber bundle includes a bundle jacket surrounding a plurality of optical fiber subunits located within the bundle passage. The plurality of optical subunits are wrapped around each other within the bundle passage forming a wrapped pattern. Each optical fiber subunit includes a subunit jacket surrounding a elongate optical fiber located within the subunit passage. The cable jacket, bundle jacket and subunit jacket may be fire resistant, and strength strands of differing lengths may be located in the bundles and the subunits.

### SUMMARY

The invention provides a process of manufacturing an air-blowing micro-cable according to independent claim 1. Further embodiments are provided by the dependent claims.

After using the present invention, compared with a traditional layer-twisting air-blowing micro-cable, the outer diameter is reduced by about 10% to 25% under the same number of cores, the number of cores of the optical fiber per unit area is increased by 22% to 91%, the present invention has characteristics of a high optical fiber density, a large number of cores and a small cable diameter, which can effectively improve the pipeline utilization, and a 1728-core air-blowing micro-cable with an optical fiber density up to about 89% can be prepared by multi-layer twisting of the maximum number of cores. The present invention adopts a semi-dry design in which the loose tube is filled with the factice, and the water-blocking yarn is used in the cable core, thus reducing use of the factice and protecting environment. Moreover, the present invention adopts a design of thin-walled tube and sheath structure, thus improving the optical fiber density of the optical cable, further reducing the cable weight, improving a laying convenience of the optical cable and reducing a construction intensity. The present invention supplements and enriches series of the air-blowing micro-cable.

### BRIEF DESCRIPTION OF THE DRAWINGS

FIG. 1 is a cross-sectional structure diagram of the embodiment 1 of an optical cable of the present invention;
FIG. 2 is a cross-sectional structure diagram of the embodiment 2 of the optical cable of the present invention;
FIG. 3 is a cross-sectional structure diagram of the embodiment 3 of the optical cable of the present invention; and
FIG. 4 is a diagram of a color ring of an optical fiber of the present invention.

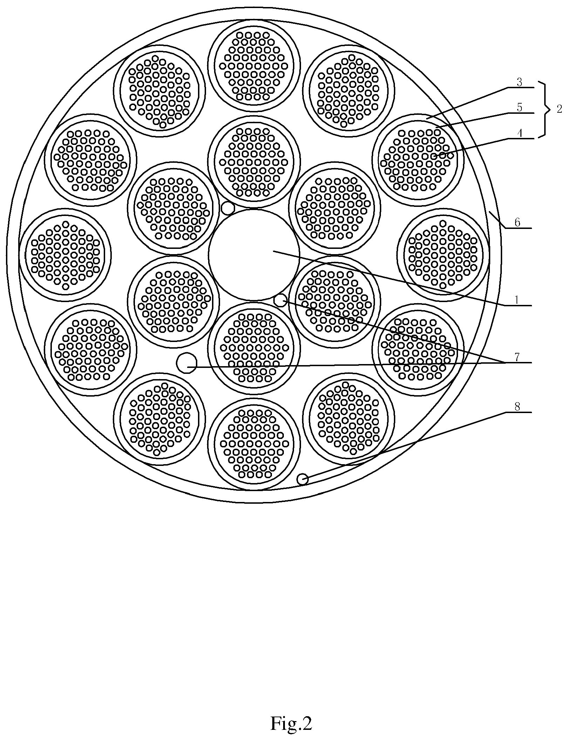

Numerals in FIG. 2 correspond to names as follows:
1 refers to central reinforcing piece, 2 refers to subunit, 3 refers to loose tube, 4 refers to optical fiber, 5 refers to factice, 6 refers to outer polyethylene sheath, 7 refers to water-blocking yarn, and 8 refers to rip cord.

### DETAILED DESCRIPTION OF THE EMBODIMENTS

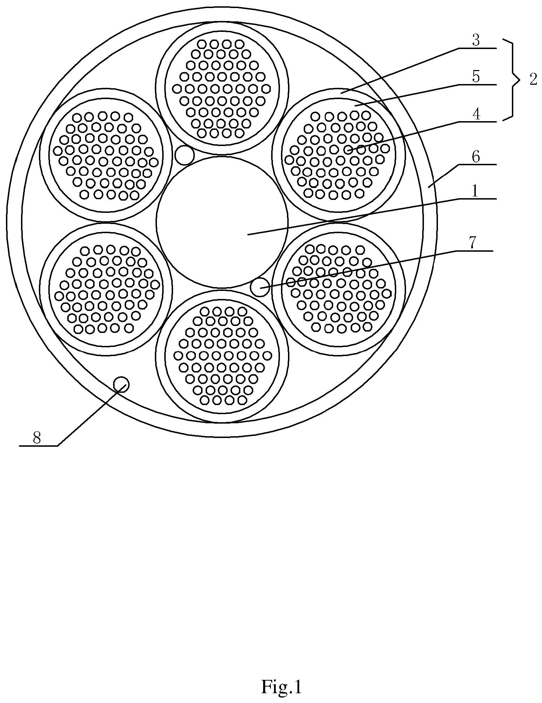

As shown in FIG. 1 to FIG. 3, an ultrahigh-density large-core-number air-blowing micro-cable includes a central reinforcing piece 1, wherein at least one optical unit twisting layer is annularly distributed on a periphery of the central reinforcing piece 1. A relatively outer optical unit twisting layer is twisted at a periphery formed by a relatively inner optical unit twisting layer, each optical unit twisting layer includes a plurality of identical subunits 2, and the subunits 2 in different optical unit twisting layers are same. A number of the subunits of the relatively outer optical unit twisting layer is larger than that of the subunits of the relatively inner optical unit twisting layer, each subunit 2 includes a loose tube 3 in which 48 pieces of 200-µm small-size optical fibers 4 are arranged The loose tube 4 is filled with factice 5, and a periphery of an outermost optical unit twisting layer is coated with an outer polyethylene sheath 6.

The central reinforcing piece 1 is a small-diameter central reinforcing piece with a diameter not greater than an outer diameter of the corresponding loose tube 3 of the subunit 2.

The central reinforcing piece 1 is specifically made of high modulus FRP with a modulus greater than 56 GPa, and a water-blocking yarn 7 is arranged in a gap between the central reinforcing piece 1 and an inner periphery of the inner optical unit twisting layer.

A further water-blocking yarn 7 is arranged in a gap between the relatively outer optical unit twisting layer and the relatively inner optical unit twisting layer.

A rip cord 8 is arranged on an inner wall of the outer polyethylene sheath 6, and a wall thickness of the outer polyethylene sheath 6 is 0.4 mm.

In embodiment 1, with reference to FIG. 1, when the total number of cores is 288, six subunits 2 are annularly distributed on the periphery of the central reinforcing piece 1. 48 pieces of 200-µm small-size optical fibers 3 are arranged in the loose tube 3 of each subunit 2, and then peripheries of the six subunits 2 are coated with the outer polyethylene sheath 6.

In embodiment 2, with reference to FIG. 2, when the total number of cores is 864, the ultrahigh-density large-core-number air-blowing micro-cable includes a first optical unit twisting layer and a second optical unit twisting layer, the first optical unit twisting layer includes six subunits 2, and the second optical unit twisting layer includes 12 subunits 2. 48 pieces of 200-µm small-size optical fibers 4 are arranged in the loose tube 3 of each subunit 2, a first optical unit is twisted at the periphery of the central reinforcing piece 1, a second optical unit is twisted at a periphery of the first optical unit, and a periphery of the second optical unit is coated with the outer polyethylene sheath 6.

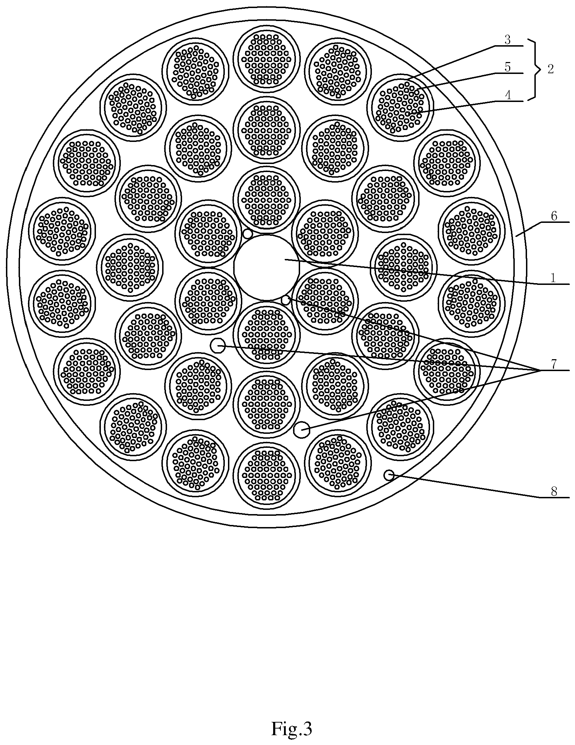

In embodiment 2, with reference to FIG. 3, when the total number of cores is 1728, the ultrahigh-density large-core-number air-blowing micro-cable includes the first optical unit twisting layer, the second optical unit twisting layer and a third optical unit twisting layer, the first optical unit twisting layer includes six subunits 2, the second optical unit twisting layer includes 12 subunits 2, and the third optical unit twisting layer includes 18 subunits 2. 48 pieces of 200-µm small-size optical fibers 4 are arranged in the loose tube 3 of each subunit 2, the first optical unit is twisted at the periphery of the central reinforcing piece 1, the second optical unit is twisted at the periphery of the first optical unit, a third optical unit is twisted at the periphery of the second optical unit, and a periphery of the third optical unit is coated with the outer polyethylene sheath 6.

A process of manufacturing an air-blowing micro-cable is provided. Optical fibers are assigned first, and then 48 pieces of small-size optical fibers are colored or printed with a color ring according to a chromatography. The optical fibers with serial numbers of 1 to 12 are colored and optical fibers with various serial numbers have different colors, and the optical fibers with serial numbers of 13 to 24, 25 to 36 and 37 to 48 are printed with a color ring according to color rings of different numbers and different colors within a unit distance, so that 48 pieces of optical fibers in each subunit are able to be quickly distinguished.

48 pieces of optical fibers are sent into the loose tube by evenly controlling an extrusion amount of PBT in the loose tube procedure. Meanwhile, the loose tube is filled with a small amount of factice to ensure stability in the outer diameter of the loose tube. At the same time, length difference and stability in the outer diameter of the optical fibers are controlled by an optical fiber twisting device.

The central reinforcing piece is made of high modulus FRP with a modulus greater than 56 GPa, and a water-blocking yarn is placed around the central reinforcing piece. A plurality of optical unit twisting layers are arranged in an extension direction of the central reinforcing piece, each optical unit twisting layer is formed by combining a plurality of subunits, and all the subunits and the non-metallic central reinforcing piece form a cable core with a stable structure through an SZ twisting procedure

Then, a layer of polyethylene material is coated outside the cable core to form an outer polyethylene sheath.

A semi-dry structure is used, the loose tube is filled with the factice, and the water-blocking yarn is used in the cable core, thus reducing use of the factice and protecting the environment.

A single loose tube of the subunit has an outer diameter of 2.1 mm±0.05 mm, and a wall thickness of 0.15 mm±0.03 mm.

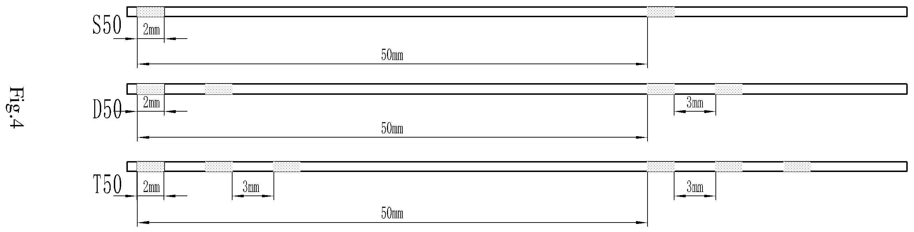

Referring to FIG. 4 specifically for color ring models, the optical fibers with the serial numbers of 13 to 24, 25 to 36 and 37 to 48 are printed with the color ring respectively according to the color rings of different numbers and different colors within the unit distance of 50 mm, and each color ring has a width of 2 mm. Model with one color ring within the unit distance is a first model S50, a model with two color rings within the unit distance is a second model D50, and a model with three color rings within the unit distance is a third model T50. An interval between adjacent color rings within each unit distance is 3 mm, and corresponding models are respectively selected to print the color ring for the optical fibers with the serial numbers of 13 to 24, 25 to 36 and 37 to 48.

Compared with a traditional layer-twisting air-blowing micro-cable, the outer diameter is reduced by about 10% to 25% for the same number of cores, the number of cores of the optical fiber per unit area is increased by 22% to 91%, the present invention has characteristics of a high optical fiber density, a large number of cores and a small cable diameter, which can effectively improve the pipeline utilization, and a 1728-core air-blowing micro-cable with an optical fiber density up to about 89% can be prepared by multi-layer twisting of the maximum number of cores. The present invention adopts a semi-dry design in which the loose tube is filled with the factice, and the water-blocking yarn is used in the cable core, thus reducing use of the factice and protecting the environment. Moreover, the present invention adopts a design of thin-walled tube and sheath structure, thus improving the optical fiber density of the optical cable, further reducing the cable weight, improving a laying convenience of the optical cable and reducing a construction intensity. The present invention supplements and enriches the series of the air-blowing micro-cables.

It is apparent for those skilled in the art that the present invention is not limited to the details of the above exemplary embodiments, and the present invention can be realized in other specific forms without departing from the concept or basic features of the present invention. Therefore, the embodiments should be regarded as being exemplary and non-limiting from any point of view, and the scope of the present invention is defined by the appended claims. Any reference numerals in the claims should not be regarded as limiting the claims involved.

In addition, it should be understood that although the description is described according to the embodiments, each embodiment does not contain only one independent technical solution. The narration mode of the description is only for purpose of clarifying, and those skilled in the art should take the description as a whole. The technical solutions in each embodiment may also be combined appropriately to form other embodiments that may be understood by those skilled in the art.

## Claims

1. A process of manufacturing an air-blowing micro-cable, comprising:
assigning optical fibers, and coloring, or printing with a color ring according to a chromatography, 48 pieces of 200 µm small-size optical fibers (4) arranged in a subunit (2) of a plurality of subunits, wherein the optical fibers (4) with serial numbers of 1 to 12 are colored and optical fibers with various serial numbers have different colors, and the optical fibers (4) with serial numbers of 13 to 24, 25 to 36 and 37 to 48 are printed with a color ring according to color rings of different numbers and different colors within a unit distance, so that the 48 pieces of optical fibers (4) in each subunit are able to be quickly distinguished;
delivering the 48 pieces of optical fibers (4) into a loose tube (3) by evenly controlling an extrusion amount of PBT in a loose tube procedure, while filling the loose tube (3) with factice (5) to ensure stability in the
outer diameter of the loose tube (3), wherein length difference and stability in the
outer diameter of the optical fibers (4) are controlled by an optical fiber twisting device;
providing a non-metallic central reinforcing piece (1) which is made of high modulus FRP material with a modulus greater than 56 GPa, placing a water-blocking yarn (7) around the non-metallic central reinforcing piece, providing a plurality of optical unit twisting layers in an extension direction of the non-metallic central reinforcing piece (1), wherein each optical unit twisting layer is formed by combining the plurality of subunits (2), each subunit (2) of the plurality of subunits comprising the loose tube, the 48 pieces of optical fibers and the factice, and all the subunits (2) and the non-metallic central reinforcing piece form a cable core with a stable structure through an SZ twisting procedure; and
coating a layer of polyethylene material outside the cable core to form an outer polyethylene sheath (6).

2. The process of manufacturing the air-blowing micro-cable according to claim 1, wherein a single loose tube (3) of the subunit (2) has an outer diameter of 2.1 mm±0.05 mm, and a wall thickness of 0.15 mm±0.03 mm.

3. The process of manufacturing the air-blowing micro-cable according to claim 1, wherein the optical fibers (4) with the serial numbers of 13 to 24, 25 to 36 and 37 to 48 are printed with the color ring respectively according to the color rings of different numbers and different colors within the unit distance of 50 mm, each color ring has a width of 2 mm, a model with one color ring within the unit distance is a first model, a model with two color rings within the unit distance is a second model, a model with three color rings within the unit distance is a third model, an interval between adjacent color rings within each unit distance is 3 mm, and corresponding models are respectively selected to print the color ring for the optical fibers (4) with the serial numbers of 13 to 24, 25 to 36 and 37 to 48.

## Patentansprüche

1. Verfahren zur Herstellung eines luftgeblasenen Mikrokabels, umfassend:
Zuordnen von optischen Fasern und Einfärbung oder Bedruckung mit einem Farbring gemäß einer Chromatographie, 48 Stück 200 µm kleine optische Fasern (4), die in einer Untereinheit (2) einer Vielzahl von Untereinheiten angeordnet sind,
wobei die optischen Fasern (4) mit den Seriennummern 1 bis 12 gefärbt sind und optische Fasern mit verschiedenen Seriennummern unterschiedliche Farben aufweisen, und die optischen Fasern (4) mit den Seriennummern 13 bis 24, 25 bis 36 und 37 bis 48 mit einem Farbring gemäß Farbringen unterschiedlicher Nummern und unterschiedlicher Farben innerhalb einer Distanz bedruckt sind, sodass die 48 optischen Fasern (4) in jeder Untereinheit schnell unterschieden werden können;
Einbringen der 48 optischen Fasern (4) in ein loses Rohr (3) durch gleichmäßige Steuerung des Extrusionsvolumens von PBT in einem losen Rohrverfahren, während das lose Rohr (3) mit Factice (5) gefüllt wird, um die Stabilität des Außendurchmessers des losen Rohrs (3) sicherzustellen,
wobei der Unterschied in der Länge und die Stabilität des Außendurchmessers der optischen Fasern (4) durch eine optische Faserverdrillungsvorrichtung gesteuert werden;
Bereitstellen eines nichtmetallischen zentralen Verstärkungsteils (1), das aus einem FRP-Material mit hohem Modul und einem Modul von mehr als 56 GPa hergestellt ist, Platzieren eines wasserblockierenden Fadens (7) um das nichtmetallische zentrale Verstärkungsteil herum, Bereitstellen einer Vielzahl von optischen Einheitsverdrehungsschichten in einer Verlängerungsrichtung des nichtmetallischen zentralen Verstärkungsteils (1) vorgesehen, wobei jede optische Einheit-Verdrehungsschicht durch Kombinieren der mehreren Untereinheiten (2) gebildet wird, wobei jede Untereinheit (2) das lose Rohr, die 48 optischen Fasern und die Füllfaser umfasst und alle Untereinheiten (2) und das nichtmetallische zentrale Verstärkungsstück durch ein SZ-Verdrehungsverfahren einen Kabelkern mit einer stabilen Struktur bilden; und
Beschichten einer Schicht aus Polyethylen-Material außerhalb des Kabelkerns, um eine Außenhülle aus Polyethylen (6) zu bilden.

2. Verfahren zur Herstellung des luftgeblasenen Mikrokabels nach Anspruch 1, wobei ein einzelner loser Schlauch (3) der Untereinheit (2) einen Außendurchmesser von 2,1 mm ± 0,05 mm und eine Wandstärke von 0,15 mm ± 0,03 mm aufweist.

3. Verfahren zur Herstellung des luftgeblasenen Mikrokabels nach Anspruch 1,
wobei die optischen Fasern (4) mit den Seriennummern 13 bis 24, 25 bis 36 und 37 bis 48 jeweils mit einem Farbring entsprechend den Farbringen unterschiedlicher Nummern und unterschiedlicher Farben innerhalb einer Distanz von 50 mm bedruckt sind, wobei jeder Farbring eine Breite von 2 mm aufweist, ein Modell mit einem Farbring innerhalb der Einheit eine erste Einheit ist, ein Modell mit zwei Farbringen innerhalb der Einheit eine zweite Einheit ist, ein Modell mit drei Farbringen innerhalb der Einheit eine dritte Einheit ist, ein Abstand zwischen benachbarten Farbringen innerhalb jeder Einheit 3 mm beträgt und entsprechende Modelle jeweils ausgewählt werden, um den Farbring für die optischen Fasern (4) mit den Seriennummern 13 bis 24, 25 bis 36 und 37 bis 48.

## Revendications

1. Procédé de fabrication d'un micro-câble soufflé par air, comprenant :
l'attribution de fibres optiques, et la coloration, ou l'impression avec un anneau de couleur, selon une certaine chromatographie, de 48 segments de fibres optiques (4) de petite taille de 200 µm disposées dans une sous-unité (2) parmi une pluralité de sous-unités, dans lequel les fibres optiques (4) avec les numéros de série allant de 1 à 12 sont colorées et des fibres optiques (4) avec divers numéros de série présentent des couleurs différentes, et les fibres optiques (4) avec les numéros de série allant de 13 à 24, de 25 à 36 et de 37 à 48 sont imprimées avec un anneau de couleur en fonction des anneaux de couleur de nombres différents et de couleurs différentes à l'intérieur d'une distance unitaire, de sorte que les 48 segments de fibres optiques (4) dans chaque sous-unité (2) puissent être distingués rapidement ;
la distribution des 48 segments de fibres optiques (4) dans un tube desserré (3) en commandant uniformément une quantité d'extrusion de PBT dans une procédure de tube desserré, tout en remplissant le tube desserré (3) avec un factice (5) pour assurer une stabilité du diamètre externe du tube desserré (3), dans lequel la différence de longueur et la stabilité du diamètre externe des fibres optiques (4) sont commandées par un dispositif de tordage de fibre optique ;
la fourniture d'un segment de renforcement central non-métallique (1) qui est constitué de FRP à module élevé avec un module supérieur à 56 GPa, le placement d'un fil de blocage d'eau (7) autour du segment de renforcement central non-métallique, la fourniture d'une pluralité de couches de tordage d'unité optique dans une direction d'extension du segment de renforcement central non-métallique (1), dans lequel chaque couche de tordage d'unité optique est formée en combinant la pluralité de sous-unités (2), chaque sous-unité (2) parmi la pluralité de sous-unités comprenant le tube desserré, les 48 segments de fibres optiques et le factice, et toutes les sous-unités (2) et le segment de renforcement central non-métallique forment une âme de câble avec une structure stable au moyen une procédure de tordage SZ ; et
le revêtement d'une couche de matériau polyéthylène à l'extérieur de l'âme de câble pour former une gaine de polyéthylène externe (6).

2. Procédé de fabrication du micro-câble soufflé par air selon la revendication 1, dans lequel un seul tube desserré (3) de la sous-unité (2) présente un diamètre externe de 2,1 mm ± 0,05 mm, et une épaisseur de paroi de 0,15 mm ± 0,03 mm.

3. Procédé de fabrication du micro-câble soufflé par air selon la revendication 1, dans lequel les fibres optiques (4) avec les numéros de série allant de 13 à 24, de 25 à 36 et de 37 à 48 sont imprimées avec l'anneau de couleur respectivement en fonction des anneaux de couleur de nombres différents et de couleurs différentes à l'intérieur de la distance unitaire de 50 mm, chaque anneau de couleur présente une largeur de 2 mm, un modèle avec un anneau de couleur à l'intérieur de la distance unitaire est un premier modèle, un modèle avec deux anneaux de couleur à l'intérieur de la distance unitaire est un deuxième modèle, un modèle avec trois anneaux de couleur à l'intérieur de la distance unitaire est un troisième modèle, un intervalle entre des anneaux de couleur adjacents à l'intérieur de chaque distance unitaire est de 3 mm, et des modèles correspondants sont sélectionnés respectivement pour imprimer l'anneau de couleur pour les fibres optiques (4) avec les numéros de série allant de 13 à 24, de 25 à 36 et de 37 à 48.
